# FASCICULE DE BREVET EUROPEEN

(11) **EP 1 698 488 B1**
(45) Date de publication et mention de la délivrance du brevet: **10.12.2008**
(21) Numéro de dépôt: 06300179.6
(22) Date de dépôt: 01.03.2006
(51) Int. Cl.: B60B 1/02, F16F 15/02, G10K 11/178, B60Q 9/00

(54) **Dispositif vibratoire et procédé de pilotage d'un élément vibratoire**
Vorrichtung zur Erzeugung von Schwingungen und Methode zur Regelung von dieser
Vibrating device and method for its control

(30) Priorité: 02.03.2005 FR 0550555
(43) Date de publication de la demande: 06.09.2006
(73) Titulaire: Peugeot Citroën Automobiles, 78140 Vélizy-Villacoublay (FR)
(72) Inventeur: Dusi, Jacques, 77220 Gretz Armainvilliers (FR); Husson, Sébastien, 78150 Le Chesnay (FR); Henriot, Philippe, 75017 Paris (FR); Jacquet, Bernard, 78350 Jouy en Josas (FR)

(56) Documents cités:
- EP-A- 0 348 691
- WO-A-90/13109
- WO-A-02/057116
- DE-U1- 29 821 040
- FR-A- 2 757 301
- FR-A- 2 838 082
- GB-A- 2 345 276
- US-A- 5 629 986
- US-A- 5 802 184
- US-A1- 2004 090 321
- PATENT ABSTRACTS OF JAPAN vol. 1997, no. 08, 29 août 1997 (1997-08-29) & JP 09 109757 A (MITSUBISHI MOTORS CORP), 28 avril 1997 (1997-04-28)
- PATENT ABSTRACTS OF JAPAN vol. 2000, no. 23, 10 février 2001 (2001-02-10) & JP 2001 163131 A (MAZDA MOTOR CORP), 19 juin 2001 (2001-06-19)

## Description

La présente invention concerne un dispositif atténuateur de vibrations et d'aide à la conduite et un véhicule comportant un tel dispositif.

L'invention concerne plus particulièrement un dispositif atténuateur destiné à être fixé sur un élément de structure, par exemple la structure d'un véhicule automobile, ledit dispositif étant également apte à avertir notamment par des vibrations le conducteur du véhicule d'événements extérieurs liés ou en rapport avec l'utilisation du véhicule. L'invention concerne également un procédé de pilotage d'un élément vibratoire en mode de fonctionnement soit en antivibratoire, soit d'aide à la conduite.

Il est connu des dispositifs anti-vibratoires qui sont aptes à améliorer le confort des passagers d'un véhicule automobile en générant des vibrations déterminées et adaptées aux caractéristiques vibratoires d'une source, afin d'en atténuer les effets. Il est aussi connu que la principale source vibratoire de la structure d'un véhicule automobile est constituée par le groupe motopropulseur, dont le fonctionnement à bas régime se traduit par une dégradation significative du confort des occupants. Pour pallier ce manque de confort, il est connu d'utiliser un moyen générateur de vibrations, de préférence disposé sur un élément de structure du véhicule. Le pilotage du moyen générateur de vibrations s'effectue habituellement par un moyen de commande qui est apte à recevoir un signal de référence provenant d'un moyen de mesure des vibrations de la source vibratoire du véhicule et qui est apte à délivrer un signal de pilotage audit moyen générateur de vibrations pour générer des vibrations déterminées adaptées aux caractéristiques vibratoires de la source. Il est ainsi connu que le pilotage s'effectue sur une plage de fréquences limitée, par exemple uniquement lorsque le moteur fonctionne à bas régime. Pour des plages de fréquences plus élevées, le pilotage du moyen générateur de vibrations ne s'effectue plus.

WO-A-9 013 109 montre un système acoustique dans un véhicule qui peut être intégré avec un système de suppression de bruit.

La demanderesse a constaté que de tels dispositifs vibratoires ont une mise en oeuvre relativement coûteuse au vu des prestations données, lesquelles se limitent uniquement à une utilisation des dispositifs vibratoires pour des fréquences limitées, c'est-à-dire principalement lorsque le moteur du véhicule fonctionne au ralenti. Par conséquent, l'intérêt de recourir à de tels dispositifs n'est pas généralisable à l'ensemble des véhicules et plus particulièrement pour des véhicules citadins, pour lesquels le coût de fabrication en grande série ne peut s'affranchir d'une telle mise en oeuvre.

Ainsi, le but de la présente invention est de pallier tout ou partie des inconvénients de l'art antérieur relevés ci-dessus.

A cette fin, le dispositif vibratoire selon l'invention, par ailleurs conforme à la définition générique qu'en donne le préambule ci-dessus, est essentiellement caractérisé en ce que le moyen de commande comporte, d'une part des premiers et seconds ensembles de paramètres de filtre permettant de générer des vibrations de première nature déterminée adaptée aux caractéristiques vibratoires de la source afin d'en atténuer les effets, et de seconde nature déterminée et inadaptée aux caractéristiques vibratoires de la source afin d'être ressenties par le conducteur, lesdits premiers ensembles de paramètres de filtre correspondant à différents états prédéterminés de fonctionnement de ladite source, lesdits seconds ensembles de paramètres de filtre correspondant à différents états prédéterminés de signal et, d'autre part une unité de sélection desdits premiers et seconds ensembles de paramètres de filtre pour l'application de cet ensemble par le filtre.

Suivant d'autres caractéristiques de l'invention :
- un ensemble de paramètres de filtre parmi lesdits premiers ensembles ou lesdits seconds ensembles est sélectionné par l'unité de sélection sélectionne lorsque les moyens de mesure délivrent respectivement uniquement un signal de référence ou un signal d'alerte,
- le dispositif vibratoire comporte des moyens de recueil d'un signal de contrôle des vibrations et une unité d'ajustage des paramètres dudit filtre adaptatif en fonction de ce signal de contrôle,
- le moyen de mesure du signal de référence est un accéléromètre.

L'invention a également pour objet un procédé de pilotage d'un élément vibratoire comprenant une étape de recueil d'un signal de référence traduisant les vibrations émises par une source, une étape de pilotage de l'élément vibratoire de sorte à générer des contre vibrations déterminées adaptées aux caractéristiques vibratoires de la source afin d'en atténuer les effets.

Le procédé selon l'invention se caractérise essentiellement en ce qu'il comporte une étape de recueil d'un signal d'alerte et une étape de pilotage de l'élément vibratoire de sorte à générer des vibrations déterminées inadaptées aux caractéristiques vibratoires de la source ou des nuisances sonores destinées à être ressenties ou perçues par le conducteur.

Selon d'autres caractéristiques du procédé de l'invention :
- il comporte une étape de sélection du mode de fonctionnement d'aide à la conduite lorsque, indépendamment du signal de référence, un système de surveillance délivre le signal d'alerte,
- le pilotage de l'élément vibratoire consiste soit en une étape de traitement du signal de référence, une étape de sélection d'un ensemble de paramètres de filtre parmi des premiers ensembles, une étape d'application d'un premier ensemble de paramètres sélectionné à un filtre, une étape de filtrage du signal de référence selon le premier ensemble de paramètres de filtre sélectionné, et une étape de génération de contre vibrations déterminées adaptées aux caractéristiques vibratoires de la source,
- soit en une étape de traitement du signal de référence, une étape de sélection d'un ensemble de paramètres de filtre parmi des seconds ensembles, une étape d'application d'un second ensemble de paramètres sélectionné à un filtre, une étape de filtrage du signal de référence selon le second ensemble de paramètres de filtre sélectionné, et une étape de génération de vibrations déterminées inadaptées aux caractéristiques vibratoires de la source,
- la fréquence du signal de pilotage de l'élément vibratoire est comprise entre 10 Hz et 1 kHz pour le mode de fonctionnement en antivibratoire, et est comprise entre 10 Hz et 20 kHz pour le mode de fonctionnement d'aide à la conduite.
- il comporte une étape de recueil d'un signal de contrôle des vibrations ressentie par le conducteur et une étape d'ajustage des paramètres dudit filtre adaptatif en fonction de ce signal de contrôle.

L'invention sera mieux comprise à la lecture de la description qui va suivre, donnée uniquement à titre d'exemple et faite en se référant aux dessins annexés, sur lesquels :
- la figure 1 représente un schéma bloc général d'un dispositif vibratoire mettant en oeuvre l'invention ;
- la figure 2 représente un organigramme du procédé de l'invention.

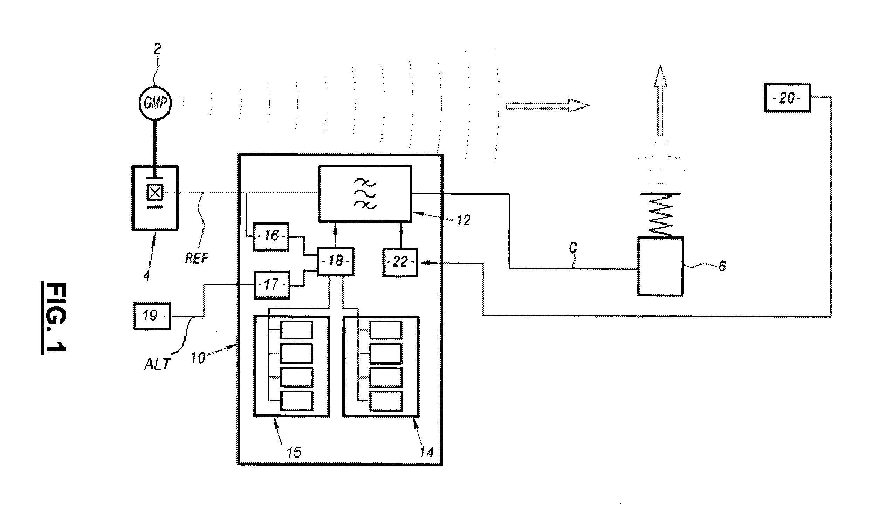

La figure 1 représente un système vibratoire embarqué sur un véhicule automobile, comprenant notamment un groupe motopropulseur GMP 2, formé principalement d'un moteur thermique et d'une boite de transmission, source de vibrations dites initiales.

Les vibrations initiales sont représentées sur la figure 1 sous la forme d'une onde se propageant à partir de la source 2 vibratoire du véhicule automobile, à la structure porteuse de celle-ci.

Un moyen 4 de mesure formant capteur de vibrations 4 est associé et placé à proximité de la source vibratoire 2 de manière à délivrer un signal de référence, noté REF, qui traduit les vibrations initiales. Ledit moyen de mesure des vibrations est de préférence un capteur 4 du type accéléromètre.

Le dispositif vibratoire se compose de préférence d'un moyen générateur de vibrations constitué principalement par un ou plusieurs générateurs 6 et apte à générer notamment une vibration de même pulsation et en opposition de phase à la vibration initiale transmise par la source 2.

Le dispositif vibratoire comporte également un moyen 10 de commande apte à piloter au moins l'un des générateurs 6 selon la nature du signal de référence REF. De préférence, ledit moyen de commande comporte un filtre 12 adaptatif qui est apte à transformer le signal de référence REF en un signal de pilotage C du générateur 6 de vibrations.

Le moyen de commande comporte également des premiers ensembles de paramètres de filtre 14 stockés dans des zones mémoire et au moins une unité 18 de sélection d'un de ces premiers ensembles 14. De préférence, la sélection s'effectue selon le signal de référence REF. L'unité 18 est alors apte à appliquer l'ensemble sélectionné de paramètres au filtre 12 adaptatif.

Dans un mode de réalisation préféré, le moyen générateur 6 de vibrations comporte un unique générateur de vibrations agencé sur un élément de la structure du véhicule. L'élément de la structure est de préférence une traverse disposée sensiblement à l'avant du véhicule, tandis que l'unique générateur 6 est du type batteur. La traverse, sur laquelle est ainsi solidarisé le batteur, coopère avec au moins un élément de support d'un groupe motopropulseur de sorte que le fonctionnement du moteur provoque des vibrations de la traverse, principalement au ralenti, c'est-à-dire pour une fréquence voisine de 25 Hz.

Le générateur 6 de contre-vibrations génère ainsi sous la commande du dispositif 10 des contre-vibrations destinées à atténuer les vibrations initiales générées par le GMP 2, ces contre-vibrations sont représentées sur la figure 1 par une onde CVI se propageant à partir du générateur 6.

Le moyen 10 de pilotage comporte, outre lesdits premiers ensembles 14 de paramètres de filtre, des seconds ensembles 15 de paramètres de filtre, ou cartographies, chaque ensemble de paramètres de filtre étant destiné à être utilisé par le filtre 12 adaptatif pour transformer le signal de référence REF de manière à piloter le générateur 6.

Par exemple, chaque ensemble de paramètres permet d'obtenir un signal de commande pour une plage de fréquence différente.

En général, l'application des premiers ensembles 14 de paramètres au filtre 12 adaptatif rend apte la génération de contre vibrations CVI en opposition de phase aux vibrations émises par la source vibratoire, de sorte à en atténuer les effets. L'application des seconds ensembles 15 de paramètres au filtre 12 rend apte la génération de vibrations VI inadaptés aux vibrations émises par la source vibratoire, de sorte à accentuer les vibrations initiales.

Une unité 16 de détermination d'un état de fonctionnement de la source 2, une unité 17 de détermination des événements extérieurs liés ou en rapport avec l'utilisation du véhicule, et une unité 18 de sélection d'un ensemble de paramètres parmi lesdits premiers et seconds ensembles 14 et 15 sont également compris dans le dispositif 10 de commande et permettent de sélectionner un ensemble de paramètres de filtre correspondant soit à un état de fonctionnement déterminé de la source 2, soit à un degré de dangerosité, pour transmettre cet ensemble de paramètres sélectionné au filtre 12.

Tandis que les unités de détermination 16 et de sélection 18 permettent de sélectionner un ensemble de paramètres parmi lesdits premiers 14 uniquement à partir du signal REF délivré par le capteur 4, les unités de détermination 17 et de sélection 18 permettent quant à elles de sélectionner un ensemble de paramètres parmi lesdits seconds 15 à partir d'un signal ALT délivré par un système 19 de surveillance à la conduite d'un véhicule.

Selon que l'unité 18 de sélection applique au filtre 12 un ensemble de paramètres parmi lesdits premiers et seconds ensembles 14 et 15, le générateur de vibration génère soit des contre vibrations déterminées et adaptées aux caractéristiques vibratoires de la source 2 afin d'en atténuer les effets, soit des vibrations déterminées inadaptées aux caractéristiques vibratoires de la source 2 afin d'accentuer ou de créer des vibrations de la structure du véhicule ou des nuisances sonores, lesquelles sont de préférence destinées à être ressenties ou perçues par le conducteur.

Avantageusement, le système comprend également un capteur 20 de contrôle des vibrations résultantes qui permet de mesurer les vibrations résultant des vibrations initiales générées par la source 2 et des vibrations VI ou CVI générées par le générateur 6. Le signal délivré par le capteur de contrôle 20 est recueilli par une unité d'ajustage 22 incluse dans le dispositif 10 de commande, puis transmis au filtre 12 afin d'en modifier des paramètres courants, entraînant de la sorte une convergence vers soit un minimum de vibrations soit un maximum de vibrations selon les valeurs respectives des signaux de référence REF et d'alerte ALT.

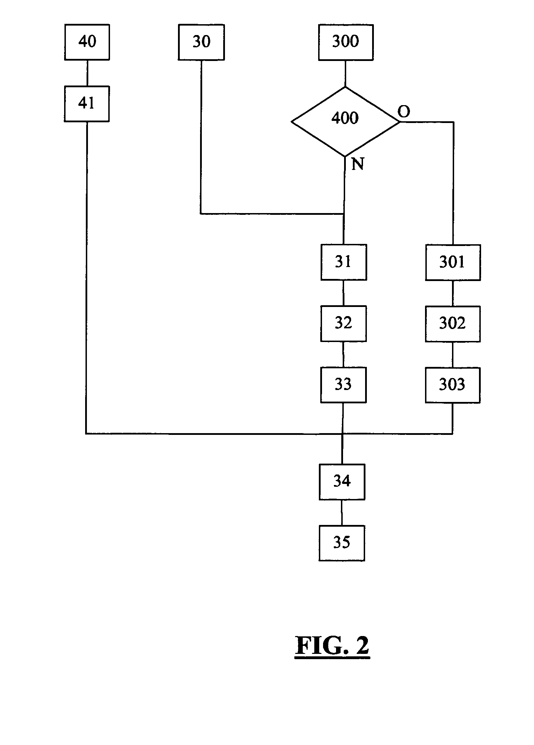

En référence à la figure 2, on va maintenant décrire le procédé de l'invention de manière générale.

Ce procédé débute par une étape 30 de recueil du signal REF délivré par le moyen 4 de mesure traduisant les vibrations initiales émises par la source 2.

Cette étape 30 est suivie d'une étape 31 de traitement du signal REF par l'unité 16 pour délivrer à l'unité 18 de sélection directement la commande de sélection d'un ensemble de paramètres de filtre parmi lesdits premiers ensembles 14 de paramètres de filtre.

L'étape 31 est suivie d'une étape 32 de sélection d'un premier ensemble de paramètres de filtre et d'une étape 33 d'application de l'ensemble de paramètres sélectionné au filtre 12.

S'ensuit une étape 34 de filtrage du signal de référence REF à l'aide de l'ensemble de paramètres de filtre sélectionné pour former le signal de pilotage C et une étape 35 de génération de contre vibrations CVI par le générateur 6.

Le procédé comporte également une étape 300 de recueil du signal d'alerte ALT délivré par le système 19 de surveillance à la conduite d'un véhicule, une étape 301 de traitement du signal ALT par l'unité 17 pour délivrer à l'unité 18 de sélection directement la commande de sélection d'un ensemble de paramètres de filtre parmi lesdits seconds ensembles 15 de paramètres de filtre.

L'étape 301 est suivie d'une étape 302 de sélection d'un second ensemble de paramètres de filtre et d'une étape 303 d'application de l'ensemble de paramètres sélectionné au filtre 12.

Le procédé comporte aussi une étape 400 de comparaison du signal ALT à un seuil S1 réalisée après l'étape 30 de recueil du signal REF.

De préférence, le seuil S1 permet de vérifier la présence du signal ALT délivré par le système 19 de surveillance à la conduite d'un véhicule, de sorte à préférer l'avertissement du conducteur d'un événement extérieur au traitement de l'antivibratoire. Ainsi, dès que le système 19 de surveillance délivre un signal d'alerte, le batteur 6 bascule du mode de fonctionnement en antivibratoire au mode de fonctionnement d'aide à la conduite, indépendamment de la valeur du signal de référence.

Avantageusement, le procédé comporte également une étape 40 de recueil d'une mesure des vibrations résultant des vibrations initiales émises par la source 2 et des vibrations VI ou CVI émises par le générateur 6 et une étape 41 d'ajustage de paramètres du filtre 12 mis en oeuvre par le module 22 qui permet, à l'aide d'algorithmes connus, d'ajuster des paramètres sélectionnés du filtre adaptatif 12 de manière à faire converger le système vers soit un minimum de vibrations lorsque des premiers ensembles 14 de paramètres sont appliqués au filtre 12, soit un maximum de vibrations lorsque des seconds ensembles 15 de paramètres sont appliqués au filtre 12.

L'invention permet ainsi d'obtenir une bonne réactivité du dispositif vibratoire grâce à l'utilisation d'ensembles 14 et 15 prédéterminés de paramètres de filtre.

Dans le mode de réalisation décrit, le signal de pilotage C délivré par le filtre adaptatif 12 est, tel qu'à l'issue de l'étape 34 :
- soit le signal REF filtré, amplifié et en opposition de phase générant des contre vibrations déterminées et adaptées aux caractéristiques vibratoires de la source 2 afin d'en atténuer les effets,
- soit le signal REF filtré, amplifié et de phase quelconque générant des vibrations déterminées inadaptées aux caractéristiques vibratoires de la source 2 afin d'accentuer ou de créer des vibrations de la structure du véhicule destinées à être ressenties par le conducteur, ou de créer des nuisances sonores destinées à être perçue par le conducteur.

Dans le mode de réalisation décrit, le batteur 6 est de préférence apte à traiter l'antivibratoire pour un signal de pilotage ayant une fréquence comprise entre 10 Hz et 1 kHz, et d'avertir le conducteur d'un événement extérieur pour une fréquence comprise entre 10 Hz et 20 kHz.

Ainsi, le dispositif de l'invention permet avantageusement de réduire les vibrations provoquées par le fonctionnement d'un moteur à combustion interne au ralenti afin d'augmenter le confort du véhicule, mais aussi de créer des vibrations ou une nuisance sonore, ou les deux en même temps, afin d'informer le conducteur d'un événement extérieur lié ou en rapport avec l'utilisation du véhicule.

Dans le mode de réalisation décrit, le batteur 6, disposé de préférence sur la traverse du véhicule, transfert une accélération du volant de l'ordre d'environ 0,70 m.s⁻² pour une fréquence vibratoire d'environ 75 hertz en mode de fonctionnement en accentuation des vibrations. Pour ce même mode de fonctionnement, la batteur 6 est apte à créer un bruit pour une fréquence vibratoire d'environ 1 kHz.

De plus, l'invention permet également une forte adaptabilité aux différences entre les véhicules grâce à l'utilisation d'un dispositif adaptatif permettant de modifier les paramètres de filtre en fonction des vibrations résultantes mesurées, tant en mode vibratoire qu'en mode contre vibratoire.

Une telle invention est remarquable en ce qu'elle peut être aisément mise en oeuvre et en ce qu'elle permet de réduire significativement les vibrations de la structure du véhicule pour des points de fonctionnement déterminés du groupe motopropulseur, et d'avertir le conducteur d'évènements qui sont liés ou en rapport avec la conduite de son véhicule.

Un tel dispositif vibratoire est remarquable en ce qu'il permet une commande du batteur 6 sur une bande de fréquence plus large, comprise de préférence entre 10 Hz et 20 kHz, afin de traiter soit l'antivibratoire, soit l'avertissement du conducteur d'un événement extérieur lié ou en rapport avec l'utilisation du véhicule.

## Revendications

1. Dispositif vibratoire du type comprenant un moyen générateur (6) de vibrations, destiné à être disposé sur un élément de structure notamment d'un véhicule automobile, un moyen de commande (10) apte à recevoir un signal de référence (REF) provenant d'un moyen de mesure (4) des vibrations transmises par une source (2) vibratoire du véhicule, ledit moyen de commande (10) étant apte à délivrer un signal de pilotage (C) audit moyen générateur (6) de vibrations pour générer des contre vibrations déterminées et adaptées aux caractéristiques vibratoires de la source (2) afin d'en atténuer les effets, ledit moyen (10) de commande étant également apte à recevoir un signal d'alerte (ALT) provenant d'un système de surveillance à la conduite (19) d'un véhicule pour délivrer audit moyen générateur (6) de vibrations un signal de pilotage (C) pour générer des vibrations déterminées inadaptées aux caractéristiques vibratoires de la source (2) ou des nuisances sonores, destinées à être ressenties ou perçues par le conducteur, ledit moyen de commande (10) comportant un filtre (12) adaptatif pour transformer le signal (REF) délivré par le moyen de mesure (4) des vibrations en un signal de pilotage (C) dudit moyen générateur (6) de vibrations, **caractérisé en ce que** ledit moyen de commande (10) comporte, d'une part des premiers et seconds ensembles (14, 15) de paramètres de filtre permettant de générer des vibrations de première nature déterminée adaptée aux caractéristiques vibratoires de la source (2) afin d'en atténuer les effets, et de seconde nature déterminée et inadaptée aux caractéristiques vibratoires de la source (2) afin d'être ressenties par le conducteur, lesdits premiers ensembles (14) de paramètres de filtre correspondant à différents états prédéterminés de fonctionnement de ladite source (2), lesdits seconds ensembles (15) de paramètres de filtre correspondant à différents états prédéterminés de signal d'alerte (ALT) et, d'autre part une unité (18) de sélection permettant de sélectionner un ensemble de paramètres de filtre pour l'application de cet ensemble par le filtre (12) parmi lesdits premiers ensembles (14) et lesdits seconds ensembles (15) lorsque les moyens de mesure (4, 19) délivrent respectivement uniquement un signal de référence (REF) ou un signal de d'alerte (ALT).

2. Dispositif selon la revendication 1, **caractérisé en ce qu'**il comporte des moyens de recueil d'un signal de contrôle des vibrations et une unité (22) d'ajustage des paramètres dudit filtre adaptatif (12) en fonction de ce signal de contrôle.

3. Dispositif selon l'une quelconque des revendications 1 à 2 **caractérisé en ce que** le moyen de mesure (4) du signal de référence (REF) est un accéléromètre.

4. Procédé de pilotage d'un élément (6) vibratoire comprenant une étape (30) de recueil d'un signal de référence (REF) traduisant les vibrations émises par une source (2), une étape (35) de pilotage (C) de l'élément (6) vibratoire de sorte à générer des contre vibrations (CVI) déterminées adaptées aux caractéristiques vibratoires de la source (2) afin d'en atténuer les effets, l'élément vibratoire (6) étant en mode de fonctionnement en antivibratoire, le procédé comportant une étape (300) de recueil d'un signal d'alerte (ALT) provenant d'un système de surveillance à la conduite (19) d'un véhicule et une étape (35) de pilotage (C) de l'élément (6) vibratoire de sorte à générer des vibrations (VI) déterminées inadaptées aux caractéristiques vibratoires de la source (2) ou des nuisances sonores destinées à être ressenties ou perçues par le conducteur, l'élément vibratoire (6) passant alors en mode de fonctionnement d'aide à la conduite **caractérisé en ce qu'**il comporte une étape (400) de sélection du mode de fonctionnement du véhicule comportant une comparaison du signal (ALT) avec un seuil (S1), le mode de fonctionnement passant du mode de fonctionnement en anti-vibratoire au mode de fonctionnement d'aide à la conduite lorsque le signal d'alerte (ALT) est supérieur à un seuil (S1), indépendamment du signal de référence (REF), le pilotage (C) de l'élément (6) vibratoire comportant, si le signal d'alerte (ALT) reste en-dessous du seuil (S1) une étape (31) de traitement du signal de référence (REF), une étape (32) de sélection d'un ensemble de paramètres de filtre parmi des premiers ensembles (14), une étape (34) de filtrage du signal de référence (REF) selon le premier ensemble de paramètres de filtre sélectionné, et une étape (35) de génération de contre vibrations (CVI) déterminées adaptées aux caractéristiques vibratoires de la source (2) et le pilotage (C) de l'élément (6) vibratoire comportant, si le signal d'alerte (ALT) dépasse le seuil (S1) une étape (302) de sélection d'un ensemble de paramètres de filtre parmi des seconds ensembles (15), une étape (303) d'application d'un second ensemble de paramètres sélectionné à un filtre (12), une étape (34) de filtrage du signal de référence (REF) selon le second ensemble de paramètres de filtre sélectionné, et une étape (35) de génération de vibrations (VI) déterminées inadaptées aux caractéristiques vibratoires de la source (2).

5. Procédé selon la revendication 4, **caractérisé en ce que** la fréquence du signal de pilotage de l'élément vibratoire (6) est comprise entre 10 Hz et 1 kHz pour le mode de fonctionnement en antivibratoire, et est comprise entre 10 Hz et 20 kHz pour le mode de fonctionnement d'aide à la conduite.

6. Procédé selon l'une quelconque des revendications 4 à 5, **caractérisé en ce qu'**il comporte une étape (40) de recueil d'un signal de contrôle des vibrations ressentie par le conducteur et une étape (41) d'ajustage des paramètres dudit filtre (12) adaptatif en fonction de ce signal de contrôle.

## Claims

1. Vibration device of the type comprising a vibration generator means (6), intended to be positioned on a structural element, especially of a motor vehicle, a control means (10) able to receive a reference signal (REF) coming from a measurement means (4) for measuring vibrations emitted by a vibration source (2) of the vehicle, said control means (10) being able to deliver a control signal (C) to said vibration generator means (6) for generating specific counter-vibrations matching the vibration characteristics of the source (2) so as to reduce the effects thereof, said control means (10) also being able to receive a warning signal (ALT) coming from a system for monitoring the driving (19) of a vehicle in order to deliver to said vibration generator means (6) a control signal (C) for generating specific vibrations not matching the vibration characteristics of the source (2) or of noise annoyance, intended to be felt or perceived by the driver, said control means (10) comprising an adaptive filter (12) for transforming the signal (REF) delivered by the vibration measurement means (4) into a control signal (C) for said vibration generator means, **characterized in that** said control means (10) comprises, on the one hand, first and second sets (14, 15) of filter parameters enabling generation of vibrations of a first specific kind matching the vibration characteristics of the source (2) so as to reduce the effects thereof, and of a second specific kind not matching the vibration characteristics of the source (2) so as to be felt by the driver, said first sets (14) of filter parameters corresponding to various predetermined operational states of said source (2), said second sets (15) of filter parameters corresponding to various predetermined states of the warning signal (ALT) and, on the other hand, a selection unit (18) allowing selection of a set of filter parameters for the application of this set by the filter (12) among said first sets (14) and said second sets (15) when the measurement means (4, 19) respectively deliver only a reference signal (REF) or a warning signal (ALT).

2. Device according to Claim 1, **characterized in that** it comprises means for collecting a vibration control signal and a unit (22) for adjusting the parameters of said adaptive filter (12) according to this control signal.

3. Device according to either one of claims 1 or 2, **characterized in that** the measurement means (4) for measuring the reference signal (REF) is an acceleration meter.

4. Method for controlling a vibration element (6) comprising a step (30) of collecting a reference signal (REF) converting the vibrations emitted by a source (2), a step (35) of controlling (C) the vibration element (6) so as to generate specific counter-vibrations (CVI) matching the vibration characteristics of the source (2) so as to reduce the effects thereof, said, the vibration element (6) being in an anti-vibration mode of operation, the method comprising a step (300) of collecting a warning signal (ALT) coming from a system for monitoring the driving (19) of a vehicle and a step (35) of controlling (C) the vibration element (6) so as to generate specific vibrations (VI) not matching the vibration characteristics of the source (2) or of noise annoyance, intended to be felt or perceived by the driver, the vibration element (6) then shifting into a drive-assist mode of operation **characterized in that** it comprises a step (400) of selecting a mode of operation of the vehicle comprising comparison of the signal (ALT) with a threshold (S1), the mode of operation shifting from the anti-vibration mode of operation to the drive-assist mode of operation when the warning signal (ALT) is greater than a threshold (S1), independently of the reference signal (REF), the control (C) of the vibration element (6) comprising, if the warning signal (ALT) remains below the threshold (S1), a step (31) of processing the reference signal (REF), a step (32) of selecting a set of filter parameters among the first sets (14), a step (34) of filtering the reference signal (REF) according to the first set of filter parameters selected, and a step (35) of generating specific counter-vibrations (CVI) matching the vibration characteristics of the source (2) and the control (C) of the vibration element (6) comprising, if the warning signal (ALT) exceeds the threshold (S1), a step (302) of selecting a set of filter parameters among the second sets (15), a step (303) of applying a second set of selected parameters to a filter (12), a step (34) of filtering the reference signal (REF) according to the second selected set of filter parameters, and a step (35) of generating specific vibrations (VI) not matching the vibration characteristics of the source (2).

5. Method according to Claim 4, **characterized in that** the frequency of the control signal for the vibration element (6) is between 10 Hz and 1 kHz for the anti-vibration mode of operation, and is between 10 Hz and 20 kHz for the drive-assist mode of operation.

6. Method according to either one of claims 4 to 5, **characterized in that** it comprises a step (40) of collecting a monitoring signal monitoring vibrations felt by the driver and a step (41) of adjusting the parameters of said adaptive filter (12) according to this monitoring signal.

## Patentansprüche

1. Vorrichtung zur Erzeugung von Schwingungen, umfassend ein Mittel (6) zur Erzeugung von Schwindungen, das dazu bestimmt ist, auf einem Strukturelement insbesondere eines Fahrzeugs angeordnet zu werden, ein Steuermittel (10), das ein Referenzsignal (REF) empfangen kann, das von einem Mittel (4) zum Messen der von einer Schwingungsquelle (2) des Fahrzeugs übertragenen Schwingungen kommt, wobei das Steuermittel (10) ein Steuersignal (C) an das Mittel (6) zur Erzeugung von Schwingungen liefern kann, um Bestimmte Gegenschwingungen zu erzeugen, die an die Schwingungsmerkmale der Quelle (2) angepasst sind, um deren Auswirkungen zu dämpfen, wobei das Steuermittel (10) auch ein Warnsignal (ALT) empfangen kann, das von einem Lenküberwachungssignal (19) eines Fahrzeugs kommt, um an das Mittel (6) zur Erzeugung von Schwingungen ein Steuersignal (C) zu liefern, um bestimmte Schwingungen, die nicht an die Schwingungsmerkmale der Quelle (2) angepasst sind, oder Lärmbelästigungen zu erzeugen, die dazu bestimmt sind, von dem Fahrer gespürt oder wahrgenommen zu werden, wobei das Steuermittel (10) einen Anpassungsfilter (12) umfasst, um das Signal (REF) das vom Mittel (4) zum Messen der Schwingungen geliefert wird, in ein Steuersignal (C) des Mittels (6) zur Erzeugung von Schwingungen umzuformen, **dadurch gekennzeichnet, dass** das Steuermittel (10) einerseits erste und zweite Einheiten (14, 15) von Filterparametern umfassen, die es ermöglichen, Schwingungen erster bestimmter Natur, die an die Schwingungsmerkmale der Quelle (2) angepasst ist, um deren Auswirkungen zu dämpfen, und zweiter bestimmter Natur, die nicht an die Schwingungsmerkmale der Quelle (2) angepasst ist, um vom Lenker gespürt zu werden, zu erzeugen, wobei die ersten Einheiten (14) von Filterparametern verschiedenen vorbestimmten Betriebszuständen der Quelle (2) entsprechen, wobei die zweiten Einheiten (15) von Filterparametern verschiedenen vorbestimmten Zuständen eines Warnsignals (ALT) entsprechen, und andererseits eine Auswahleinheit (18) umfassen, die es ermöglicht, eine Einheit von Filterparametern für die Anwendung dieser Einheit durch den Filter (12) unter den ersten Einheiten (14) und den zweiten Einheiten (15) auszuwählen, wenn die Messhilfsmittel (4, 19) nur ein Referenzsignal (REF) bzw. ein Warnsignal (ALT) liefern.

2. Vorrichtung nach Anspruch 1, **dadurch gekennzeichnet, dass** sie Mittel zur Aufnahme eines Kontrollsignals der Schwingungen und eine Einheit (22) zur Einstellung der Parameter des Anpassungsfilters (12) in Abhängigkeit von diesem Kontrollsignal umfasst.

3. Vorrichtung nach einem der Ansprüche 1 bis 2, **dadurch gekennzeichnet, dass** das Mittel (4) zum Messen des Referenzsignals (REF) ein Beschleunigungsmesser ist.

4. Verfahren zur Steuerung eines Schwingungselements (6) umfassend einen Schritt (30) der Aufnahme eines Referenzsignals (REF), der die von einer Quelle (2) entsandten Schwingungen übersetzt, einen Schritt (35) der Steuerung (C) des Schwingungselements (6), so dass bestimmten Gegenschwingungen (CVI) erzeugt werden, die an die Schwingungsmerkmale der Quelle (2) angepasst sind, um deren Auswirkungen zu dämpfen, wobei das Schwingungselement (6) im Nichtschwingungsbetriebsmodus ist, wobei das Verfahren einen Schritt (300) der Aufnahme eines Warnsignals (ALT), das von einem Überwachungssystem an der Lenkung (19) eines Fahrzeugs kommt, und einen Schritt (35) der Steuerung (C) des Schwingungselements (6) umfasst, um bestimmte Schwingungen (VI), die nicht an die Schwingungsmerkmale der Quelle (2) angepasst sind, oder Lärmbelästigungen zu erzeugen, die dazu bestimmt sind, vom Lenker gespürt oder wahrgenommen zu werden, wobei das Schwingungselement (6) nun in den Lenkunterstützungsbetriebsmodus übergeht, **dadurch gekennzeichnet, dass** es einen Schritt (400) der Auswahl des Betriebsmodus des Fahrzeugs besitzt, umfassend einen Vergleich des Signals (ALT) mit einer Schwelle (S1), wobei der Betriebsmodus vom Nichtschwingungsmodus in den Lenkunterstützungsmodus übergeht, wenn das Warnsignal (ALT) größer als eine Schwelle (S1) ist, unabhängig vom Referenzsignal (REF), wobei die Steuerung (C) des Schwingungselements (6), wenn das Warnsignal (ALT) unter der Schwelle (S1) bleibt, einen Schritt (31) der Bearbeitung des Referenzsignals (REF), einen Schritt (32) der Auswahl einer Einheit von Filterparametern unter den ersten Einheiten (14), einen Schritt (34) der Filterung des Referenzsignals (REF) nach der ersten ausgewählten Einheit von Filterparametern, und einen Schritt (35) der Erzeugung von bestimmten Gegenschwingungen (CVI), die an die Schwingungsmerkmale der Quelle (2) angepasst sind, umfasst, und wobei die Steuerung (C) des Schwingungselements (6), wenn das Warnsignal (ALT) die Schwelle (S1) überschreitet, einen Schritt (302) der Auswahl einer Einheit von Filterparametern unter den zweiten Einheiten (15), einen Schritt (303) der Anwendung einer zweiten ausgewählten Einheit von Parametern an einem Filter (12), einen Schritt (34) der Filterung des Referenzsignals (REF) nach der zweiten ausgewählten Einheit von Filterparametern, und einen Schritt (35) der Erzeugung von bestimmten Schwingungen (VI), die nicht an die Schwingungsmerkmale der Quelle (2) angepasst sind, umfasst.

5. Verfahren nach Anspruch 4, **dadurch gekennzeichnet, dass** die Frequenz des Steuersignals des Schwingungselements (6) zwischen 10 Hz und 1 kHz für den Nichtschwingungsmodus und zwischen 10 Hz und 20 kHz für den Lenkunterstützungsmodus beträgt.

6. Verfahren nach einem der Ansprüche 4 bis 5, **dadurch gekennzeichnet, dass** es einen Schritt (40) der Aufnahme eines Kontrollsignals der Schwingungen, das vom Lenker gespürt wird, und einen Schritt (41) der Einstellung der Parameter des Anpassungsfilters (12) in Abhängigkeit von diesem Kontrollsignal umfasst.
